# EUROPÄISCHE PATENTSCHRIFT

(11) **EP 2 639 261 B1**
(45) Veröffentlichungstag und Bekanntmachung des Hinweises auf die Patenterteilung: **01.08.2018**
(21) Anmeldenummer: 13158565.5
(22) Anmeldetag: 11.03.2013
(51) Int. Cl.: C08K 3/04, C08K 5/3412, C08K 5/35, C08K 7/24, H01B 1/24

(54) **Elektrisch leitfähigen Kohlenstoff enthaltende Polyamidzusammensetzung**
Polyamide composition containing electrically conductive carbon
Composition de polyamide conductrice d'électricité contenant du carbone

(30) Priorität: 16.03.2012 DE 102012204181
(43) Veröffentlichungstag der Anmeldung: 18.09.2013
(73) Patentinhaber: Evonik Degussa GmbH, 45128 Essen (DE)
(72) Erfinder: Häger, Harald, Dr., 59348 Lüdinghausen (DE); Wursche, Roland, Dr., 48249 Dülmen (DE); Hermasch, Sylvia Anita, Dr., 45768 Marl (DE); Jakisch, Lothar, Dr., 08056 Zwickau (DE); Krause, Beate, Dr., 01662 Meißen (DE); Pötschke, Petra, Dr., 01309 Dresden (DE); Socher, Robert, 68163 Mannheim (DE)

(56) Entgegenhaltungen:
- EP-B1- 1 301 509
- WO-A1-2010/128013
- WO-A1-2012/059467
- WO-A1-2012/059468
- DE-C1- 19 812 409

## Beschreibung

Gegenstand der Erfindung ist eine Polyamidzusammensetzung, die als elektrisch leitfähiges Kohlenstoffsubstrat Carbon Nanotubes (CNTs) und/oder Graphen sowie zusätzlich einen bi- oder oligofunktionellen Koppler enthält.

Kunststoffe sind gemeinhin und bis auf wenige sehr spezielle Ausnahmen elektrische Isolatoren, auf denen sich bei der Herstellung, Verarbeitung und dem Gebrauch daraus hergestellter Folien oder Formteile hohe Oberflächenladungen ansammeln können.

Diese statischen Aufladungen führen zu unerwünschten Effekten und ernsten Gefahrensituationen, welche von der Anziehung von Staub, Haftung von hygienisch bedenklichen Verunreinigungen, Zerstörung elektronischer Bauteile durch Funkenüberschläge, physiologisch unangenehmen elektrischen Schlägen, Entzündung brennbarer Flüssigkeiten in Behältern oder Rohren, in denen diese gerührt, gegossen oder gefördert werden, bis hin zu Staubexplosionen beispielsweise beim Umfüllen mit Stäuben oder Mehlen gefüllter Großgebinde oder beim Gesteins- bzw. Kohleabbau reichen.

Es besteht daher seit dem Einsatz dieser Kunststoffe die Notwendigkeit, statische Aufladungen zu verhindern oder aber in einem Maße zu minimieren, dass diese nicht mehr gefährlich werden können.

Typische Thermoplaste haben spezifische Oberflächenwiderstände im Bereich von 10¹⁶ bis 10¹⁴ Ohm und können daher Spannungen von bis zu 15.000 Volt aufbauen. Wirksame Antistatika können die spezifischen Oberflächenwiderstände der Kunststoffe auf 10¹⁰ bis 10⁹ Ohm abbauen. Ein deutlich höheres Niveau für die Ableitung von elektrischen Ladungen muss hingegen erzielt werden, wenn Kunststoffe in elektronischen Bauteilen von Großgeräten wie z.B. im Trafo- oder Elektroschrankherstellerbereich eingesetzt werden sollen oder in einer Vielzahl von Anwendungen im Automobil- und Flugzeugbau. Hier müssen elektrisch leitfähige Formmassen eingesetzt werden, die einen spezifischen Oberflächenwiderstand von weniger als 10⁹ Ohm aufweisen müssen. Entscheidend ist darüber hinaus, dass in derartigen Kunststoffanwendungen nicht nur der Oberflächenwiderstand, sondern auch der Durchgangswiderstand durch Kunststoffteile mit einer Dicke bis zu mehreren Millimetern in einem ebensolchen Bereich liegen muss und sich bei Teilen, die mittels Spritzguss hergestellt werden, häufig Anisotropieeffekte ausbilden, die generell schwierig zu unterbinden sind.

Für die Fertigung von leitfähigen Kunststoffteilen wird in der Praxis meist eine Kunststoffzusammensetzung verwendet, die Ruß und insbesondere Leitfähigkeitsruß enthält. Leitfähige Ruße sind dabei fraktale Strukturen, die durch gegenseitige Berührung in der Lage sind, die elektrische Ladung im Polymer weiterzuleiten und auch einen niedrigen Durchgangswiderstand zu garantieren. Dazu sind im Allgemeinen hohe Füllgrade zwischen 15 und 25 Gew.-% erforderlich, die nicht nur die technischen Polymereigenschaften besonders in Hinsicht auf die mechanischen Kennzahlen wie Kerbschlagzähigkeit oder Zugfestigkeit negativ beeinflussen, sondern auch eine ungenügende Oberflächengüte für Bauteile im sichtbaren Bereich bewirken, die von der Industrie bemängelt wird.

Als Leitfähigkeitsruße werden spezielle Industrieruße bezeichnet, die unter anderem durch das Furnace-Ruß-Verfahren oder durch thermische Spaltung mittels Acetylen-Ruß-Verfahren hergestellt werden. Ihr DBP(Dibutylphthalat)-Wert liegt dabei über 110 ml je 100 g Ruß mit einer extrem hohen spezifischen Oberfläche. Typische Handelsprodukte sind z. B. Ketjenblack EC oder auch Printex XE2 oder Printex L6.

Im Vergleich dazu können zwar Carbon Nanotubes (CNTs) und speziell Graphen in deutlich geringeren Konzentrationen eingesetzt werden, doch ist ihre Dispergierung extrem prozessabhängig. Beispielsweise ist es entscheidend für die spätere Wirksamkeit, wie die CNTs im Bereich der Eingabe/des Feedings in die Extrusionsschnecke eingebracht werden und welche Schneckenkonfiguration in einem Extrusionsprozess gewählt wird. Dies sind nur einige relevante Prozessparameter, die einer beliebig einfachen Nutzung entgegen stehen. Weiterhin liegen die Kosten der CNTs erheblich über dem Preis von leitfähigen Rußen - Graphen ist noch deutlich teurer -, so dass sofort deutlich wird, dass hier ein weiterer Optimierungsbedarf in der Absenkung der CNT- bzw. Graphen-Konzentration liegt. In einigen Kunststoffen ist darüber hinaus die Dispergierung dieser Produkte besonders schwierig, da die Schmelzeviskosität und die Polarität einiger Thermoplaste dem entgegen wirken.

Carbon Nanotubes sind neben Graphit, Diamant, amorphem Kohlenstoff und Fullerenen eine weitere Modifikation des Elements Kohlenstoff. Die Kohlenstoffatome sind dabei in Sechsecken angeordnet. Die Struktur entspricht einer aufgerollten einatomigen oder mehratomigen Schicht von Graphit, so dass ein Hohlzylinder mit typischerweise wenigen Nanometern Durchmesser und bis zu einigen Millimetern Länge entsteht. Man unterscheidet grundsätzlich mehrwandige und einwandige Kohlenstoff-Nanoröhren, in der Literatur meist auch MWNTs und SWNTs (aus dem Englischen: multi walled nanotubes und single walled nanotubes) abgekürzt. Kohlenstoff-Nanoröhren zeigen aufgrund von Van-der-Waals-Kräften eine starke Tendenz, sich zu Bündeln zu vereinigen, weshalb die Entknäuelung und Dispergierung ohne starkes Verkürzen durch starke Scherkräfte im Extrusionsprozess essentiell ist. Typische Handelsprodukte sind von verschiedenen Herstellern erhältlich, wovon hier stellvertretend die Firmen Bayer, Nanocyl und Arkema mit ihren Grades Baytubes® C150P, Baytubes® C150HP, Baytubes® C70P, Nanocyl™ NC7000 und Electrovac Graphistrength C100 genannt werden sollen. Weitere Hersteller bieten CNTs in Form von Masterbatches an, beispielsweise Hyperion und C-Polymers.

Polyamidzusammensetzungen, die CNTs enthalten, sind beispielsweise aus der US 4 663 230, der US 5 098 771, der US 5 578 543, der US 5 591 382, der US 5 611 964, der US 5 643 502, der US 5 651 922, der US 6 235 674 und der US 6 608 133 bekannt.

Die WO2010/128013 beschreibt Polyamid-Polypropylen-Blends, die Carbon Nanotubes enthalten können. Da Polyamid und Polypropylen miteinander unverträglich sind, enthält die Formmasse zusätzlich ein Propfcopolymerisat des Propylens als Verträglichkeitsvermittler.

Aus der DE 19812409C1 und der WO02/04441 sind multifunktionelle Kopplungsagenzien mit zyklischen Iminoester- und Iminoethergruppen bekannt, die in Polymerblends oder Polymerverbunden eingesetzt werden können.

Bei der Compoundierung von Polymeren mit leitfähigen Füllstoffen treten häufig Agglomerate nicht vollständig dispergierter Füllstoffe auf, die die Produktqualität der Zusammensetzung einschränken. Beispielsweise können solche Agglomerate zu Oberflächendefekten führen, die für die Anwendung nicht tolerierbar sind. Zudem wird bei gegebener Konzentration an leitfähigem Füllstoff die maximal erreichbare Leitfähigkeit bei weitem nicht erreicht.

Die Beurteilung der Dispergiergüte kann zum Beispiel über lichtmikroskopische Untersuchungen an Dünnschnitten erfolgen, wobei die Flächenanteile der Agglomerate erfasst werden.

Es bestand vor diesem Hintergrund die Aufgabe, die Dispergierung von Carbon Nanotubes bzw. Graphen in Polyamidformmassen zu verbessern. In einem Aspekt der Aufgabe sollte die Oberflächenqualität der Formmasse auf diese Weise verbessert werden. In einem weiteren Aspekt der Aufgabe sollte bei einem gegebenen Gehalt an Carbon Nanotubes bzw. Graphen die elektrische Leitfähigkeit verbessert werden bzw. zur Erzielung einer gewünschten Leitfähigkeit ein geringerer Füllstoffgehalt erforderlich sein.

Diese Aufgabe wurde dadurch gelöst, dass durch Zusatz bestimmter bi- bzw. oligofunktioneller Koppler, die sowohl zur Polyamidmatrix als auch zur CNT- bzw. Graphen-Oberfläche eine Bindung eingehen, die Dispergierung dieser Kohlenstoffmodifikationen verbessert wird.

Gegenstand der Erfindung ist somit eine Polyamidzusammensetzung, die folgende Komponenten enthält:
a) Mindestens 40 Gew.-Teile, vorzugsweise mindestens 50 Gew.-Teile und besonders bevorzugt mindestens 60 Gew.-Teile Polyamid,
b) 0,15 bis 25 Gew.-Teile, vorzugsweise 0,2 bis 8 Gew.-Teile und besonders bevorzugt 0,3 bis 6 Gew.-Teile elektrisch leitfähigen Kohlenstoff, ausgewählt aus der Gruppe Carbon Nanotubes und Graphen,
c) 0,3 bis 8 Gew.-Teile, vorzugsweise 0,4 bis 6 Gew.-Teile und besonders bevorzugt 0,5 bis 5 Gew.-Teile einer oligofunktionellen Verbindung mit einem zahlenmittleren Molekulargewicht Mₙ von maximal 8000 g/mol, die mindestens eine funktionelle Gruppe enthält, welche mit reaktiven Gruppen auf der Kohlenstoffoberfläche reagieren kann, sowie zusätzlich mindestens eine funktionelle Gruppe, die mit einer Endgruppe des Polyamids reagieren kann,
d) optional übliche Hilfs- und Zusatzstoffe,
wobei die Summe der Gewichtsteile der Komponenten a) bis d) 100 beträgt und wobei geeignete funktionelle Gruppen ausgewählt sind aus Oxazinongruppen, Oxazolongruppen, Oxazolingruppen, Isocyanatgruppen, Carbodiimidgruppen, N-Acyllactamgruppen, N-Acylimidgruppen, aromatischen oder aliphatischen Kohlensäureestergruppen, Epoxidgruppen und Carbonsäureanhydridgruppen mit der Maßgabe, dass Verbindungen, die mindestens zwei Kohlensäureestergruppen und daneben keine weitere
anspruchsgemäße funktionelle Gruppe enthalten sowie Verbindungen, die mindestens zwei Carbodiimidgruppen enthalten, nur in Kombination mit aminofunktionalisierten Carbon Nanotubes eingesetzt werden, und dass Verbindungen, die mindestens eine Epoxidgruppe oder mindestens eine Carbonsäureanhydridgruppe enthalten, vorzugsweise ein zahlenmittleres Molekulargewicht Mₙ von maximal 5000 g/mol, besonders bevorzugt von maximal 3000 g/mol und insbesondere bevorzugt von maximal 2000 g/mol besitzen.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66 oder Copolyamide auf dieser Basis mit Einheiten, die sich von Terephthalsäure und/oder Isophthalsäure herleiten (im Allgemeinen als PPA bezeichnet) sowie PA9T und PA10T und deren Blends mit anderen Polyamiden. In einer bevorzugten Ausführungsform enthalten die Monomereinheiten des Polyamids im Mittel mindestens 8, mindestens 9 bzw. mindestens 10 C-Atome. Bei Monomereinheiten, die sich von Gemischen von Lactamen herleiten, wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1,8-Octandisäure), PA8 (herstellbar aus Capryllactam), PA612, PA810, PA106, PA108, PA9, PA613, PA614, PA618, PA812, PA128, PA1010, PA1013, PA10, PA814, PA148, PA1012, PA11, PA1014, PA1212, PA12 sowie das Polyamid aus 1,12-Dodecandisäure und 4,4'-Diaminodicyclohexylmethan (PA PACM12), insbesondere ausgehend von einem 4,4'-Diaminodicyclohexylmethan mit einem trans,trans-Isomerenanteil von 35 bis 65 %. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können. Das Polyamid kann auch ein Polyetheramid oder ein Polyetheresteramid sein. Es können auch Mischungen unterschiedlicher Polyamide eingesetzt werden.

Carbon Nanotubes haben typischerweise die Form von Röhren, die aus Graphitschichten gebildet werden. Die Graphitlagen sind in konzentrischer Art um die Zylinderachse angeordnet. Carbon Nanotubes werden auch als Kohlenstoff-Nanofibrillen bezeichnet. Sie haben ein Längen-zu-Durchmesser-Verhältnis von mindestens 5, vorzugsweise von mindestens 100, besonders bevorzugt von mindestens 1.000. Der Durchmesser der Nanofibrillen liegt typischerweise im Bereich von 0,003 bis 0,5 µm, vorzugsweise im Bereich von 0,005 bis 0,08 µm und besonders bevorzugt im Bereich von 0,006 bis 0,05 µm. Die Länge der Kohlenstoff-Nanofibrillen beträgt typischerweise 0,5 bis 1.000 µm, vorzugsweise 0,8 bis 100 µm, besonders bevorzugt 1 bis 10 µm. Die Kohlenstoff-Nanofibrillen besitzen einen hohlen, zylinderförmigen Kern. Dieser Hohlraum hat typischerweise einen Durchmesser von 0,001 bis 0,1 µm und bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Darüber hinaus sind auch Typen zugänglich, deren Wand aus zwei Graphitlagen besteht. Die Kohlenstoff- Nanofibrillen können dabei als Agglomerate von bis zu 1.000 µm Durchmesser aus mehreren Nanofibrillen vorliegen. Die Agglomerate können die Form von Vogelnestern, von gekämmtem Garn oder von offenen Netzstrukturen besitzen. Die Synthese der Carbon Nanotubes erfolgt beispielsweise in einem Reaktor, der ein Kohlenstoff enthaltendes Gas und einen Metallkatalysator enthält, wie es z. B. in US-A 5 643 502 beschrieben wird.

Neben mehrwandigen Carbon Nanotubes (MWCNTs, multi-walled carbon nanotubes) können erfindungsgemäß auch einwandige Carbon Nanotubes (SWCNTs, single-walled carbon nanotubes) eingesetzt werden. SWCNTs haben typischerweise einen Durchmesser im Bereich weniger Nanometer, erreichen jedoch im Verhältnis zu ihrem Querschnitt beträchtliche Längen, typischerweise im Bereich mehrerer Mikrometer. Der strukturelle Aufbau von SWCNTs leitet sich von einatomigen Graphit-Lagen (Graphen) ab, die man sich zu einem nahtlosen Zylinder aufgerollt vorstellen kann. SWCNTs können hervorragende elektrische Leiter sein. Die erreichbaren Stromdichten liegen mit 10⁹ A/cm² etwa 1000-fach höher als bei Metalldrähten aus Kupfer oder Silber. Die Herstellung von SWCNTs wird beispielsweise in US 5 424 054 beschrieben.

An einem realen Carbon Nanotube findet sich immer wieder eine Reihe von Kohlenstoffatomen mit einer sp³-Hybridisierung und somit vier Bindungspartnern. Ganze Regionen von amorphem Kohlenstoff (Vernetzung der Kohlenstoffatome durch sp²-sowie sp³-Hybridisierung ohne weitreichende Ordnung) an der Hülle sind bei MWCNTs häufig vorzufinden. Eine weitere Fehlstellenmöglichkeit im Kohlenstoffnetz können unvollständige Bindungen sein. Diese freien Bindungen sind hoch reaktiv und reagieren schnell mit möglichen Bindungspartnern in der Umgebung. Es ist daher nicht ungewöhnlich, dass auf der Oberfläche von Carbon Nanotubes bedeutende Mengen an Sauerstoff- und Stickstoffgruppen identifiziert werden. Eine besonders defektarme Oberfläche erhält man nur, wenn eine Ausheilung dieser Defektstellen durch Erhitzen unter Sauerstoffausschluss bei Temperaturen über 2500 °C erfolgt.

Die technisch hergestellten CNTs enthalten in der Regel größere Mengen an Verunreinigungen. Neben Katalysatorresten ist dies hauptsächlich amorpher Kohlenstoff. Zur Reduzierung des

Anteils an amorphem Kohlenstoff macht man es sich zunutze, dass Anlagerungen aus amorphem Kohlenstoff instabiler gegen Oxidation sind als die CNTs selbst. Diese kann in einfacher Weise durch Erhitzen an Luft auf ca. 700 °C erfolgen. Dadurch kommt es allerdings unweigerlich zu einer gewissen Funktionalisierung der CNT-Oberfläche beispielsweise mit Carboxylgruppen.

Darüber hinaus sind im Handel CNTs erhältlich, deren Oberfläche gezielt funktionalisiert wurde, beispielsweise mit Aminogruppen. Durch Oxidation beispielsweise mit Salpetersäure können andererseits Carboxylgruppen und Hydroxylgruppen aufgebracht werden.

Graphen ist die Bezeichnung für eine Modifikation des Kohlenstoffs mit zweidimensionaler Struktur, in der jedes Kohlenstoffatom von drei weiteren umgeben ist, so dass sich ein bienenwabenförmiges Muster ausbildet. Graphen ist strukturell eng mit dem Graphit verwandt, der sich gedanklich durch Übereinanderschichten mehrerer Graphene vorstellen lässt. Graphen kann in größeren Mengen durch Exfolierung von Graphit (Aufspaltung in die Basalebenen) gewonnen werden. Hierzu wird Sauerstoff in das Graphitgitter interkaliert, der dann partiell mit dem Kohlenstoff reagiert und eine intrinsische Abstoßung der Schichten bewirkt. Nach chemischer Reduktion können die Graphene in weiteren Schritten in Lösungen suspendiert und in Polymere eingebettet werden. Wenn die Reduktion nicht konsequent bis zu vollständigem Umsatz geführt wird, enthält das Graphen noch sauerstoffhaltige funktionelle Gruppen.

Die oligofunktionelle Verbindung der Komponente c) enthält vorzugsweise 2 bis 40, besonders bevorzugt 2 bis 12, insbesondere bevorzugt 2 bis 6 und ganz besonders bevorzugt 2 oder 3 funktionelle Gruppen. Die obere Grenze ist dadurch begründet, dass die oligofunktionelle Verbindung ausreichend niedermolekular sein soll, um mit der Polyamidmatrix molekular mischbar zu sein. Es hat sich herausgestellt, dass dann, wenn die oligofunktionelle Verbindung in der Polyamidmatrix nur dispers verteilt werden kann, ihre Wirksamkeit eingeschränkt oder nicht mehr vorhanden ist. Aus diesem Grund besitzt die oligofunktionelle Verbindung der Komponente c) ein zahlenmittleres Molekulargewicht Mₙ von maximal 8000 g/mol, vorzugsweise von maximal 5000 g/mol, besonders bevorzugt von maximal 3000 g/mol und insbesondere bevorzugt von maximal 2000 g/mol.

Beispiele für die oligofunktionelle Verbindung sind:
1. Verbindungen, die mindestens zwei Oxazinongruppen enthalten, etwa die Verbindung 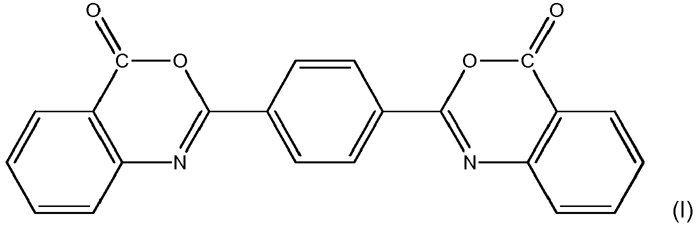 die auf bekannte Weise aus Terephthaloylchlorid und Anthranilsäure hergestellt werden kann;
2. Verbindungen, die mindestens zwei Oxazolongruppen enthalten, etwa die Verbindung 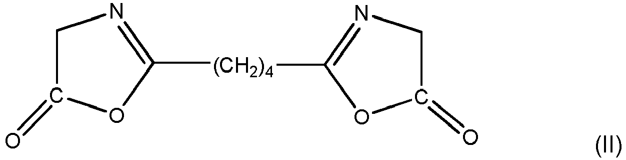 die auf bekannte Weise aus Adipinsäuredichlorid und Glycin hergestellt werden kann;
3. Verbindungen, die mindestens zwei Oxazolingruppen enthalten, etwa die Verbindung 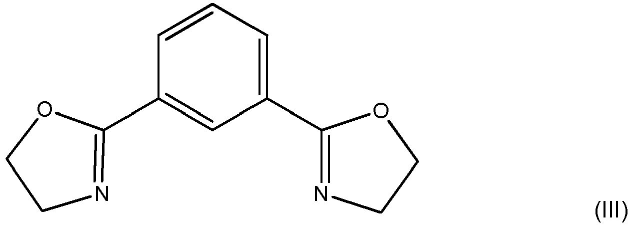 die aus Isophthalsäure und 2-Aminoethanol hergestellt werden kann und auch kommerziell erhältlich ist;
4. Verbindungen, die mindestens eine Oxazinongruppe und mindestens eine Oxazolingruppe enthalten, etwa die Verbindung 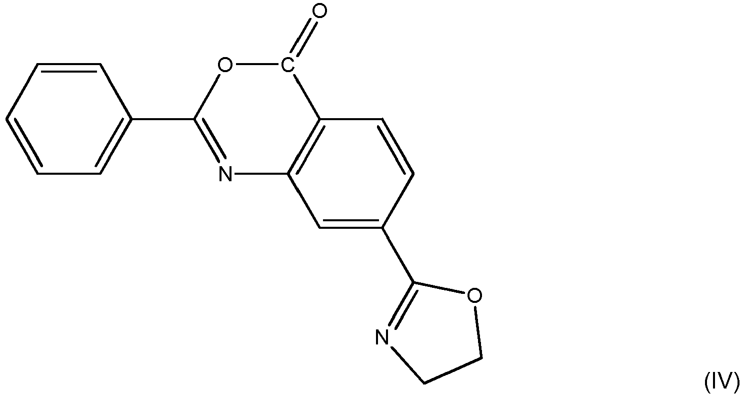 Derartige Verbindungen können gemäß DE 100 34 154 A1 hergestellt werden;
5. Verbindungen, die mindestens zwei Isocyanatgruppen enthalten, etwa die Verbindung

   O=C=N-C-(CH₂)₄-C-N=C=O (V);

   die Isocyanatgruppen können hierbei auf bekannte Weise mit einer CH-, einer NH- oder einer OH-reaktiven Verbindung verkappt sein;
6. Verbindungen, die mindestens zwei Carbodiimidgruppen enthalten, etwa 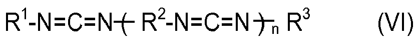
   - mit R¹ und R³ =: Alkyl mit 1 bis 20 C-Atomen, Cycloalkyl mit 5 bis 20 C-Atomen, Aryl mit 6 bis 20 C-Atomen oder Aralkyl mit 7 bis 20 C-Atomen;
   - R² =: Alkylen mit 2 bis 20 C-Atomen, Cycloalkylen mit 5 bis 20 C-Atomen, Arylen mit 6 bis 20 C-Atomen oder Aralkylen mit 7 bis 20 C-Atomen;
   - n =: 1 bis 39;
7. Verbindungen, die mindestens eine Carbodiimidgruppe und mindestens eine Isocyanatgruppe enthalten, etwa

   R¹-N=C=N(̵R²-N=C=N)̵ₙR³ (VII)

   - mit R¹ und R³ =: ein Rest, der eine Isocyanatgruppe, trägt, welche gegebenenfalls mit einer CH-, einer NH- oder einer OH-reaktiven Verbindung verkappt ist;
   - R² =: Alkylen mit 2 bis 20 C-Atomen, Cycloalkylen mit 5 bis 20 C-Atomen, Arylen mit 6 bis 20 C-Atomen oder Aralkylen mit 7 bis 20 C-Atomen;
   - n =: 0 bis 37;
8. Verbindungen, die mindestens zwei N-Acyllactamgruppen enthalten, etwa die Verbindung 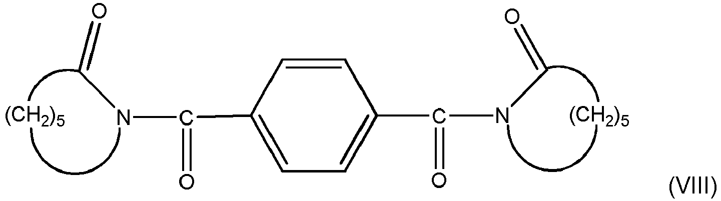
9. Verbindungen, die mindestens zwei N-Acylimidgruppen enthalten, etwa die Verbindung 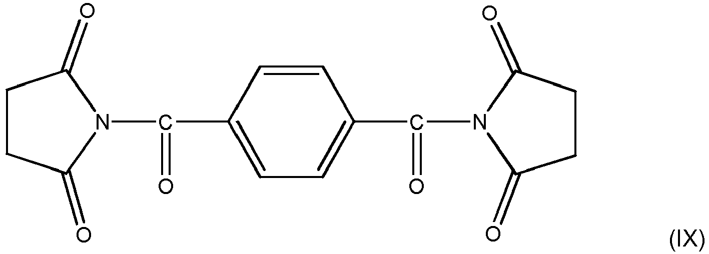
10. Verbindungen, die mindestens zwei aromatische oder aliphatische Kohlensäureestergruppen enthalten; entsprechende Verbindungen sind in der WO 00/66650 offenbart, auf die hier vollumfänglich Bezug genommen wird. Derartige Verbindungen können niedermolekular, oligomer oder polymer sein. Sie können vollständig aus Carbonateinheiten bestehen oder sie können noch weitere Einheiten aufweisen. Diese sind vorzugsweise Oligo- oder Polyamid-, -ester-, -ether-, -etheresteramid- oder-etheramideinheiten. Solche Verbindungen können durch bekannte Oligo- oder Polymerisationsverfahren bzw. durch polymeranaloge Umsetzungen hergestellt werden.
   In einer bevorzugten Ausführungsform handelt es sich um ein Polycarbonat, beispielsweise auf Basis von Bisphenol A, bzw. um ein Blockcopolymeres, das einen derartigen Polycarbonatblock enthält.
11. Verbindungen, die mindestens eine aromatische oder aliphatische Kohlensäureestergruppe sowie mindestens eine Oxazolingruppe enthalten, etwa das Reaktionsprodukt aus dem Kohlensäurediester der 4-Hydroxybenzoesäure sowie der Verbindung III, welche als Hauptkomponente folgende Verbindung enthält: 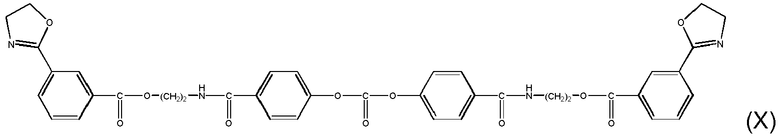
12. Verbindungen, die nur eine Isocyanatgruppe und daneben mindestens eine weitere anspruchsgemäße Gruppe enthalten.
13. Verbindungen, die mindestens zwei Epoxidgruppen enthalten, beispielsweise der Bisglycidylether von Bisphenol A, Triglycidylisocyanurat oder Epoxidharze wie Araldit.
14. Verbindungen, die mindestens zwei Carbonsäureanhydridgruppen enthalten, beispielsweise Pyromellitsäuredianhydrid, das Dianhydrid der Butan-1,2,3,4-tetracarbonsäure oder niedermolekulare Styrol-Maleinsäureanhydrid-Copolymere.
   Von den anspruchsgemäßen Gruppen der Komponente c) reagieren
   - Oxazinongruppen in erster Linie mit Hydroxyl- bzw. Aminogruppen,
   - Oxazolongruppen in erster Linie mit Hydroxyl- bzw. Aminogruppen,
   - Oxazolingruppen in erster Linie mit Carboxylgruppen,
   - Isocyanatgruppen in erster Linie mit Hydroxyl- bzw. Aminogruppen und daneben auch mit Carboxylgruppen,
   - Carbodiimidgruppen in erster Linie mit Hydroxyl- bzw. Aminogruppen und daneben auch mit Carboxylgruppen,
   - N-Acyllactamgruppen in erster Linie mit Hydroxyl- bzw. Aminogruppen,
   - N-Acylimidgruppen in erster Linie mit Hydroxyl- bzw. Aminogruppen,
   - aromatische oder aliphatische Kohlensäureestergruppen in erster Linie mit Aminogruppen,
   - Epoxidgruppen in erster Linie mit Aminogruppen und daneben auch mit Hydroxyl- bzw. Carboxylgruppen sowie
   - Carbonsäureanhydridgruppen in erster Linie mit Aminogruppen und daneben auch mit Hydroxylgruppen.

Anhand der bekannten Reaktivitäten richtet sich die Auswahl der oligofunktionellen Verbindungen c) danach, welche funktionellen Gruppen einerseits auf der Oberfläche der CNTs bzw. des Graphens und andererseits an den Enden der Polyamidketten zur Verfügung stehen. Polyamidketten sind entweder carboxyl- oder aminterminiert. Das Verhältnis von Carboxyl- und Aminogruppen kann auf bekannte Weise durch Regelung mit einem Monoamin, einer Monocarbonsäure oder bevorzugt einem Diamin oder einer Dicarbonsäure eingestellt werden.

Im einfachsten Fall kann die oligofunktionelle Verbindung der Komponente c) direkt mit dem Polyamid, den CNTs bzw. dem Graphen und gegebenenfalls den Hilfs- und Zusatzstoffen in der Schmelze gemischt werden. Dies schließt die Ausführungsform ein, dass die CNTs bzw. das Graphen bereits als Masterbatch in Polyamid, aber ohne die Komponente c), vorliegen. In anderen Fällen ist eine Vorreaktion der Komponente c) mit dem elektrisch leitfähigen Kohlenstoff in Abwesenheit des Polyamids und gegebenenfalls der übrigen Bestandteile vorteilhaft. In einer bevorzugten Ausführungsform stellt man ein Masterbatch her, das CNTs bzw. Graphen mit funktionellen Gruppen, eine passende Komponente c), die mit diesen funktionellen Gruppen reagiert und einem Polyamid vorzugsweise mit dazu komplementären, nicht reagierenden Endgruppen enthält, und mischt dieses danach in ein Polyamid ein, das passende, reaktive Endgruppen enthält. Ein Beispiel ist ein Masterbatch aus CNTs, die Carboxylgruppen tragen, einer Verbindung mit zwei Oxazolingruppen, etwa die Verbindung III, sowie einem Polyamid, das wesentlich mehr Aminoendgruppen als Carboxylendgruppen enthält. Die Oxazolingruppen reagieren teilweise mit den Carboxylgruppen, nicht aber mit den Aminoendgruppen. Im nächsten Schritt wird das Masterbatch in ein Polyamid eingemischt, das einen substantiellen Anteil an Carboxylgruppen enthält; hierbei findet die Anbindung an das Polyamid statt.

Das Masterbatch enthält vorzugsweise 3 bis 25 Gew.-Teile des elektrisch leitfähigen Kohlenstoffs, besonders bevorzugt 4 bis 22 Gew.-Teile und besonders bevorzugt 5 bis 20 Gew.-Teile, jeweils bezogen auf 100 Gew.-Teile des Masterbatches.

Neben den Bestandteilen a) bis c) kann die Polyamidzusammensetzung noch Hilfs- oder Zusatzstoffe, die zum Einstellen bestimmter Eigenschaften benötigt werden, als Komponente d) enthalten. Beispiele hierfür sind schlagzähmodifizierende Kautschuke, weitere Polymere wie z. B. Polyphenylenether, ABS oder Polyolefine, Weichmacher, Farbstoffe, Pigmente bzw. Füllstoffe wie Titandioxid, Zinksulfid, Silikate oder Carbonate, Flammschutzmittel, Verarbeitungshilfsmittel wie Wachse, Zinkstearat oder Calciumstearat, Entformungshilfsmittel, Glaskugeln, Glasfasern, Antioxidantien, UV-Absorber, HALS-Stabilisatoren oder Antidrippingmittel. Der Zusatz weiterer Polymerer muss so bemessen sein, dass das Polyamid eine kontinuierliche Phase und vorzugsweise die Matrix bildet.

In einer möglichen Ausführungsform enthält die Polyamidzusammensetzung 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Die erfindungsgemäße Polyamidzusammensetzung wird aus den einzelnen Bestandteilen vorzugsweise durch Schmelzemischen in einem knetenden Aggregat hergestellt.

In einer möglichen Ausführungsform besitzt die Polyamidzusammensetzung einen spezifischen Volumenwiderstand im Bereich von 10⁰ bis 10¹¹ Ωcm und vorzugsweise im Bereich von 10¹ bis 10⁹ Ωcm, wobei im Bereich von 10⁶ Ωcm und darüber nach DIN IEC 60093 und im Bereich unterhalb von 10⁶ Ωcm nach EN ISO 3915 gemessen wird.

Die erfindungsgemäße Polyamidzusammensetzung ist vorzugsweise eine Polyamidformmasse. Sie kann aber auch ein Pulver sein, das beispielsweise für Oberflächenbeschichtungen oder für schichtweise aufbauende Verfahren, etwa im Rapid Prototyping, dient, welche beispielsweise mittels Lasersintern, Maskensintern oder Selektives Absorbing-Sintering (SAS) arbeiten.

Aus der erfindungsgemäßen Polyamidformmasse können Formteile nach allen üblichen Methoden des Standes der Technik hergestellt und weiterverarbeitet werden, beispielsweise durch Extrusion, Coextrusion, Blasformen oder Spritzgießen. Dabei werden unter dem Begriff "Formteil" auch flächige Körper, wie Folien oder Platten, verstanden. Die erhaltenen Formteile sind ebenfalls Gegenstand der Erfindung.

Überraschenderweise wurde gefunden, dass durch die Zugabe der Komponente c) die elektrisch dissipative Wirkung bzw. die elektrische Leitfähigkeit, die durch die Carbon Nanotubes bzw. das Graphen bewirkt wird, weiter verbessert wird. Durch die Verbesserung des Perkolationsverhaltens wird insgesamt nur eine kleinere Menge der vergleichsweise sehr teuren Carbon Nanotubes bzw. Graphens benötigt.

Durch die bessere Dispergierung sowie durch die mögliche Reduzierung der Konzentration der Carbon Nanotubes bzw. des Graphens weisen die aus der Formmasse hergestellten Formteile eine verbesserte Oberflächengüte auf, die mittels Mikroskop oder durch die Messung des Reibungskoeffizienten oder des Glanzgrades bestimmbar ist.

Darüber hinaus ist in vielen Fällen die Schlagzähigkeit bzw. Kerbschlagzähigkeit der aus der erfindungsgemäßen Formmasse hergestellten Formteile verbessert, verglichen mit einer Zusammensetzung, die die Komponente c) nicht enthält. Gleiches gilt für die Zugfestigkeit.

Die Formteile aus der erfindungsgemäßen Polyamidformmasse finden weiten Einsatz dort, wo gute Leitfähigkeitseigenschaften in Verbindung mit guten mechanischen Eigenschaften verlangt werden, beispielsweise in den Industriebereichen Automobil, Luftfahrt und Elektronik sowie in Kommunikationstechnik, Sicherheitstechnik und Leichtbautechnik. Als beispielhafte Anwendungen seien Geräteschalter für exgeschützte Räume, antistatische Gehäuse, Kraftstofffilter, Kraftstoffleitungen sowie Steckverbinder genannt.

In den nachfolgenden Beispielen wurden folgende Materialien eingesetzt:

| | |
|---|---|
| **BS 1189:** | Ein niedrigviskoses PA12 mit Überschuss an Carboxylendgruppen (115 mmol/kg Carboxylendgruppen; 3 mmol/kg Aminoendgruppen); über Nacht im Vakuumtrockenschrank bei 80 °C getrocknet; danach im Exsikkator gelagert; |
| **Baytubes C150P:** | Multi-walled carbon nanotubes (MWCNT); über Nacht im Vakuumtrockenschrank bei 80 °C getrocknet; danach im Exsikkator gelagert; |
| **Nanocyl NC7000:** | MWCNT; über Nacht im Vakuumtrockenschrank bei 80 °C getrocknet; danach im Exsikkator gelagert; |
| **Nanocyl NC3152:** | aminofunktionalisierte MWCNT; über Nacht im Vakuumtrockenschrank bei 80 °C getrocknet; danach im Exsikkator gelagert; |
| **BFK 1:** | Bifunktioneller Koppler der Formel IV; siehe Herstellungsbeispiel 1; |
| **BFK 2:** | Bifunktioneller Koppler der Formel I; siehe Herstellungsbeispiel 2; |
| **BFK 3:** | Bifunktioneller Koppler der Formel |
| | 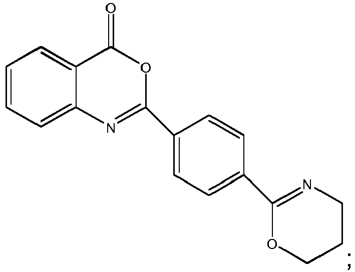 |
| | siehe Herstellungsbeispiel 3; |
| **F1** (nicht erfindungsgemäß): | Monofunktionelle Verbindung der Formel |
| | 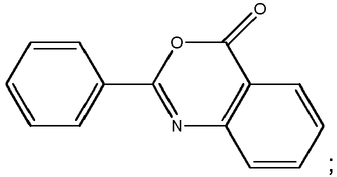 |
| | siehe Herstellungsbeispiel 4; |
| **BFK 4** (nicht erfindungsgemäß): | Bifunktionelle Verbindung der Formel |
| | 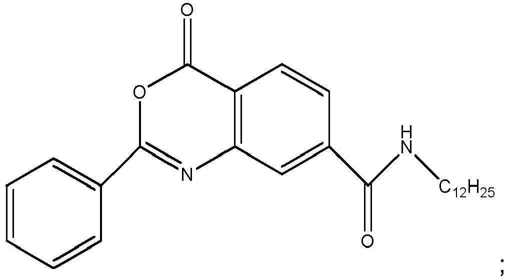 |
| | siehe Herstellungsbeispiel 5; |
| **BFK 5** (nicht erfindungsgemäß): | Bifunktionelle Verbindung der Formel |
| | 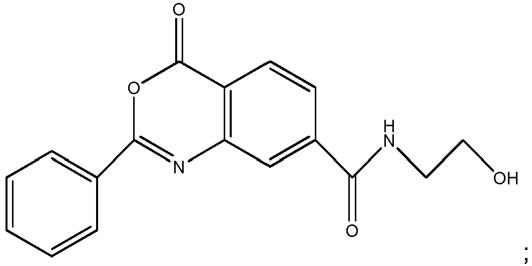 |
| | siehe Herstellungsbeispiel 6; |
| **BFK 6** (nicht erfindungsgemäß): | Bifunktionelle Verbindung der Formel |
| | 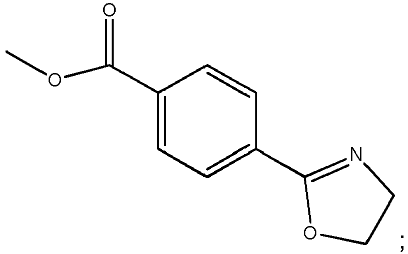 |
| | siehe Herstellungsbeispiel 7. |

### Herstellungsbeispiel 1: 7-(4,5-Dihydro-oxazol-2-yl)-2-phenyl-benzo[d][1,3]oxazin-4-on (BFK 1) entsprechend L. Jakisch et al., Journal of Polymer Science: Part A: Polymer Chemistry 2003; 41(5): 655-667

Zu einer auf 0 bis 10 °C gekühlten Lösung von 28,2 g (200 mmol) Benzoylchlorid in 500 ml getrocknetem Tetrahydrofuran wurden 36,2 g (200 mmol) 2-Aminoterephthalsäure gegeben. Dann wurden innerhalb von 30 min 20,2 g Triethylamin (200 mmol) zugetropft. Nach weiterem 1-stündigen Rühren bei Raumtemperatur wurde das Lösungsmittel im Vakuum abdestilliert. Der feste Rückstand wurde in 400 ml Wasser suspendiert, filtriert und mit Wasser gewaschen. Nach gründlichem Trocknen wurde dieses Zwischenprodukt bei 60 °C mit 300 ml Thionylchlorid gerührt, bis sich keine Blasen mehr bildeten. Danach wurde der Überschuss an Thionylchlorid im Vakuum abdestilliert. Der Rückstand wurde in 200 ml Toluol unter Rückfluss gelöst. Nach Abkühlen und Ausfällen mit 1000 ml n-Hexan wurde das Zwischenprodukt 2-Phenyl-4-oxo-4H-benzo[d][1,3]oxazin-7-carbonylchlorid abfiltriert, mit n-Hexan gewaschen und getrocknet.

28,6 g (100 mmol) dieses Zwischenprodukts wurde in 150 ml getrocknetem Tetrahydrofuran gelöst. Nach Abkühlen auf 0 bis 10 °C wurde innerhalb von 30 min eine Mischung aus 6,1 g 2-Ethanolamin (100 mmol) und 10,1 g Triethylamin (100 mmol) in 50 ml Tetrahydrofuran zugetropft. Nach weiterem 1-stündigen Rühren bei Raumtemperatur wurde der Niederschlag abgetrennt, nacheinander mit kleinen Mengen Tetrahydrofuran und Wasser gewaschen und getrocknet.

15,5 g (50 mmol) dieses Zwischenprodukts wurden bei -5 bis 0 °C in einer Mischung aus 30,0 g (250 mmol) Thionylchlorid und 200 ml getrocknetem Tetrahydrofuran suspendiert. Die Suspension wurde 12 h bei dieser Temperatur gerührt; danach wurde das Reaktionsprodukt abgetrennt, mit Tetrahydrofuran gewaschen und im Vakuum getrocknet. Das Produkt wurde in einer Lösung von 8,4 g Natriumbicarbonat (100 mmol) in 300 ml Wasser suspendiert; nach 10 min Rühren bei Raumtemperatur wurde das feste Produkt abgetrennt und mit Wasser gewaschen. Nach 10 min Erhitzen unter Rückfluss in 200 ml Aceton wurde das Endprodukt abfiltriert.

### Herstellungsbeispiel 2: 2,2'-(1,4-Phenylen)-bis(4H-3,1-benzoxazin-4-on) (BFK 2) entsprechend Inata et al.; Journal of Applied Polymer Science 1986; 32(4): 4581-4594

Die Synthese wurde in einem 500 ml-Dreihalskolben mit Magnetrührer, Rückflusskühler, Trockenrohr und Tropftrichter durchgeführt. Dazu wurden 2,03 g (10 mmol) Terephthaloyldichlorid in 50 ml N,N-Dimethylacetamid gelöst und hierzu 2,74 g (20 mmol) 2-Aminobenzoesäure als Pulver unter Rühren eingetragen. Anschließend wurde bei Raumtemperatur eine Mischung aus 2,02 g (20 mmol) Triethylamin und 5 ml N,N-Dimethylacetamid langsam zugetropft. Nach 1 h Rühren bei Raumtemperatur wurden 200 ml Wasser zugegeben, der entstandene Niederschlag abgesaugt, mit Wasser gewaschen und im Vakuum bei 80 °C getrocknet. Danach wurde das Produkt in 50 ml Acetanhydrid 2 h unter Rückfluss erhitzt. Nach Abkühlung wurde der entstandene Niederschlag abgesaugt und mit Essigsäure und danach mit Wasser gewaschen. Nach Auskochen mit Aceton wurden 3,20 g Produkt erhalten.

### Herstellungsbeispiel 3: 2-(4-Oxazolinyl)-4H-3,1-benzoazin-4-on (BFK3)

Die Verbindung wurde nach einer Vorschrift in L. Jakisch et al.; Macromolecular Symposia 2000; 149: 237-243 hergestellt.

### Herstellungsbeispiel 4: 2-Phenyl-4H-3,1-benzoxazin-4-on (F1)

In einem 500 ml-Dreihalskolben mit Magnetrührer, Rückflusskühler, Trockenrohr und Tropftrichter wurden 2,81 g (20 mmol) Benzoylchlorid in 50 ml N,N-Dimethylacetamid gelöst und hierzu 2,74 g (20 mmol) 2-Aminobenzoesäure als Pulver unter Rühren eingetragen. Anschließend wurde bei Raumtemperatur eine Mischung aus 2,02 g (20 mmol) Triethylamin und 5 ml N,N-Dimethylacetamid langsam zugetropft. Nach 1 h Rühren bei Raumtemperatur wurden 200 ml Wasser zugegeben, der entstandene Niederschlag abgesaugt, mit Wasser gewaschen und im Vakuum bei 80 °C getrocknet. Danach wurde das Produkt in 50 ml Acetanhydrid 2 h unter Rückfluss erhitzt. Nach Abkühlung wurde der entstandene Niederschlag abgesaugt und mit Essigsäure und danach mit Wasser gewaschen. Nach Umkristallisation aus n-Hexan wurden 3,65 g Produkt erhalten.

### Herstellungsbeispiel 5: 7-n-Dodecylcarbamoyl-2-phenyl-4H-3,1-benzoxazin-4-on (BFK 4)

Die Synthese ging von 2-Phenyl-7-chlorcarbonyl-4H-3,1-benzoxazin-4-on aus, dessen Synthese in L. Jakisch et al., Journal of Polymer Science: Part A: Polymer Chemistry 2003; 41(5): 655-667 beschrieben ist (dort Verbindung 10a). 2,855 g (10 mmol) dieser Substanz wurde in einem 250 ml-Dreihalskolben mit Magnetrührer, Rückflusskühler und Trockenrohr in 100 ml trockenem Tetrahydrofuran bei 0 °C suspendiert. Danach wurde eine Mischung aus 1,854 g (10 mmol) n-Dodecylamin, 1,012 g (10 mmol) Triethylamin und 20 ml trockenem Tetrahydrofuran langsam bei 0 bis 5 °C zugetropft. Die Reaktionsmischung wurde anschließend 2 h bei Raumtemperatur gerührt, danach der entstandene Niederschlag von Triethylammoniumchlorid abgesaugt und das Filtrat am Rotationsverdampfer eingeengt. Der feste Rückstand wurde mit Wasser gewaschen und im Vakuum bei 60 °C getrocknet. Nach dem Umkristallisieren aus Ethanol wurden 2,85 g Produkt erhalten.

### Herstellungsbeispiel 6: 7-(2-Hydroxyethyl)carbamoyl-2-phenyl-4H-3,1-benzoxazin-4-on (BFK 5)

Die Herstellung erfolgte analog dem Herstellungsbeispiel 5 mit 2-Ethanolamin anstelle von n-Dodecylamin.

### Herstellungsbeispiel 7: 2-(4-Methoxycarbonyl)phenyloxazolin (BFK 6)

Die Herstellung erfolgte analog dem Herstellungsbeispiel 3 aus Terephthalsäuremonomethylesterchlorid und 2-Ethanolamin und anschließendem Ringschluss mit Hilfe von Thionylchlorid.

### Herstellung der Polyamid/CNT-Compounds sowie Probenpräparation

Die Compoundherstellung im Kleinstmengenmaßstab wurde mit Hilfe eines gleichläufigen Doppelschneckencompounders der Firma DACA Instruments, Santa Barbara, USA durchgeführt. Die beiden Schnecken waren dabei konisch zueinander angeordnet. Das Innenvolumen des Microcompounders betrug 4,5 cm³ (verwendete Einwaage: 4,2 g). Über einen Bypass wurde das Material vom unteren Ende des Gerätes wieder nach oben gefördert und konnte so zirkulieren. Über ein Ventil am unteren Ende konnte das Material als Strang entnommen werden. Die Mischgeschwindigkeit betrug 250 U/min, die Mischzeit 5 min und die Mischtemperatur 210 °C. Die Einsatzmengen sind in den Tabellen 1 bis 5 angegeben.

Die extrudierten Stränge wurden in wenige Millimeter lange Stücke geschnitten und anschließend mit einer Weber-Presse (Modell PW 40 EH, Paul Otto Weber GmbH, Remshalden, Deutschland) zu Platten (30 mm Durchmesser, 0,5 mm Dicke) heißgepresst (220 °C, 1 min). Die Platten wurden vor der Messung des spezifischen Volumenwiderstandes mit Ethanol gereinigt.

### Elektrische Widerstandmessung

Für Proben mit einem spezifischen Durchgangswiderstand von mehr als 10⁷ Ω • cm wurde eine Plattenmesszelle Keithley 8009 mit Keithley-Elektrometer E6517A verwendet, während für Proben von weniger als 10⁷ Ω • cm eine Streifenmesszelle mit Keithley-Elektrometer E6517A eingesetzt wurde. Die Messergebnisse an den erfindungsgemäßen Mischungen sowie den Vergleichsmischungen sind in den Tabellen 1 bis 5 wiedergegeben.

**Tabelle 1: Beispiel 1; Rezepturen und Ergebnisse**

| BS 1189 | Baytubes C150P | | BFK 1 | Spez. Volumenwiderstand |
|---|---|---|---|---|
| [g] | [g] | [%] | [g] | [Ωcm] |
| 4,180 | 0,021 | 0,5 | 0,043 | 3,39 • 10¹⁰ |
| 4,173 | 0,026 | 0,625 | 0,042 | 1,55 • 10⁸ |
| 4,159 | 0,042 | 1 | 0,042 | 4,57 • 10⁴ |
| 4,114 | 0,084 | 2 | 0,084 | 8,07 • 10² |
| 4,076 | 0,126 | 3 | 0,126 | 6,73 • 10¹ |
| 3,991 | 0,210 | 5 | 0,210 | 3,38 • 10¹ |

Die elektrische Perkolationsschwelle liegt bei Compounds aus BS 1189 mit Baytubes C150P bei 2,1 Gew.-%. Enthalten die Compounds daneben, wie in der Tabelle 1 gezeigt, den bifunktionellen Koppler, so liegt die Perkolationsschwelle nur noch bei ca. 0,6 Gew.-%. Durch Zugabe des bifunktionellen Kopplers kommt es demnach zu einer deutlichen Reduzierung der Perkolationsschwelle auch beim Einsatz von (theoretisch) unfunktionalisierten CNTs. Auch für Werte deutlich über der elektrischen Perkolationsschwelle führt der Einsatz des bifunktionellen Kopplers zu niedrigeren elektrischen Volumenwiderstandswerten.

**Tabelle 2: Beispiel 2; Rezepturen und Ergebnisse**

| BS 1189 | Nanocyl NC7000 | | BFK 1 | Spez. Volumenwiderstand |
|---|---|---|---|---|
| [g] | [g] | [%] | [g] | [Ωcm] |
| 4,193 | 0,005 | 0,125 | 0,042 | 4,81 • 10¹² |
| 4,194 | 0,008 | 0,1875 | 0,042 | 6,49 • 10⁶ |
| 4,190 | 0,0105 | 0,25 | 0,042 | 3,90 • 10⁴ |
| 4,184 | 0,0158 | 0,375 | 0,043 | 3,80 • 10³ |
| 4,158 | 0,042 | 1 | 0,042 | 9,12 • 10¹ |
| 4,118 | 0,084 | 2 | 0,083 | 3,49 • 10¹ |
| 4,075 | 0,126 | 3 | 0,126 | 2,29 • 10¹ |
| 3,990 | 0,210 | 5 | 0,210 | 1,15 • 10¹ |

Compounds aus BS 1189 und Nanocyl NC7000 perkolieren bei ca. 0,7 Gew.-%. Bei Zugabe von mindestens 1 Gew.-% an bifunktionellen Koppler verringert sich die Perkolationsschwelle auf ca. 0,2 Gew.-%. Auch hier führt für Werte deutlich über der elektrischen Perkolationsschwelle der Einsatz des bifunktionellen Kopplers zu niedrigeren elektrischen Volumenwiderstandswerten.

**Tabelle 3: Beispiel 3; Rezepturen und Ergebnisse**

| BS 1189 | Nanocyl NC3152 | | BFK 1 | Spez. Volumenwiderstand |
|---|---|---|---|---|
| [g] | [g] | [%] | [g] | [Ωcm] |
| 4,158 | 0,042 | 1 | - | 8,39 • 10¹⁰ |
| 4,149 | 0,053 | 1,25 | - | 7,68 • 10⁸ |
| 4,115 | 0,084 | 2 | - | 2,50 • 10⁵ |
| 4,075 | 0,126 | 3 | - | 1,02 • 10⁴ |
| 4,032 | 0,168 | 4 | - | 1,81 • 10³ |
| 4,187 | 0,016 | 0,375 | 0,016 | 7,93 • 10¹³ |
| 4,175 | 0,021 | 0,5 | 0,011 | 2,93 • 10⁸ |
| 4,166 | 0,032 | 0,75 | 0,016 | 7,23 • 10⁴ |
| 4,160 | 0,041 | 1 | 0,021 | 2,37 • 10³ |
| 4,147 | 0,052 | 1,25 | 0,026 | 3,32 • 010² |
| 4,115 | 0,084 | 2 | 0,042 | 6,12 • 10¹ |
| 4,075 | 0,126 | 3 | 0,063 | 2,23 • 10¹ |

Die Perkolationsschwelle liegt bei Compounds aus BS 1189 und Nanocyl NC3152 bei etwa 1,25 Gew.-%. Compounds, die den bifunktionellen Koppler enthalten, perkolieren hingegen bei einem CNT-Gehalt von ca. 0,5 Gew.-%. Auch hier konnte die Perkolationsschwelle durch Zugabe von bifunktionellem Koppler deutlich abgesenkt werden; zudem führt auch hier für Werte deutlich über der elektrischen Perkolationsschwelle der Einsatz des bifunktionellen Kopplers zu niedrigeren elektrischen Volumenwiderstandswerten.

**Tabelle 4: Beispiel 4 sowie Vergleichsbeispiele 1 bis 4; Wirksamkeit verschiedener Additive in BS 1189-Baytubes C150P-Compounds (1 Gew.-% Additiv und 1 Gew.-% CNT)**

| Beispiel (B) bzw. Vergleichsbeispiel (VB) | Additiv | Spez. Volumenwiderstand [Ωcm] | Bemerkungen |
|---|---|---|---|
| B4 | BFK 3 | 1,08 • 10⁴ | Isomer zu BFK 1 |
| VB 1 | BFK 4 | 4,50 • 10⁸ | |
| VB 2 | BFK 5 | 6,63 • 10⁹ | 2-Hydroxyethylamid reagiert ebenfalls mit Carboxylgruppen des PA, aber wesentlich langsamer als Oxazolin |
| VB 3 | BFK 6 | 4,34 • 10¹¹ | |

**Tabelle 5: Beispiel 5; Rezepturen und Ergebnisse**

| BS 1189 | Baytubes C150P | | BFK 2 | Spez. Volumenwiderstand |
|---|---|---|---|---|
| [g] | [g] | [%] | [g] | [Ωcm] |
| 4,174 | 0,026 | 0,625 | 0,043 | 3,49 • 10⁸ |
| 4,157 | 0,042 | 1 | 0,042 | 6,35 • 10³ |
| 4,072 | 0,042 | 1 | 0,127 | 2,64 • 10³ |

Durch die Verwendung des Bisoxazinonkopplers kommt es zu einer deutlichen Reduzierung des elektrischen Volumenwiderstandes. Ein größerer Anteil an Bisoxazinon führt nochmal zu einer leichten Erniedrigung des Volumenwiderstandes. Allerdings ist durch den sehr geringen Anteil an Aminoendgruppen im BS 1189 nur von einer geringen Anbindung an das Polymer auszugehen.

Bei einem höheren Gehalt an CNT ist ein derartiges Compound als Masterbatch geeignet; beim Mischen eines solchen Masterbatches mit einem Polyamid, das einen höheren Anteil an Aminoendgruppen aufweist, würde eine effiziente Anbindung auch an das Polyamid stattfinden.

## Patentansprüche

1. Polyamidzusammensetzung, die folgende Komponenten enthält:
a) Mindestens 40 Gew.-Teile Polyamid,
b) 0,15 bis 25 Gew.-Teile elektrisch leitfähigen Kohlenstoff, ausgewählt aus der Gruppe Carbon Nanotubes und Graphen,
c) 0,3 bis 8 Gew.-Teile einer oligofunktionellen Verbindung mit einem zahlenmittleren Molekulargewicht Mₙ von maximal 8000 g/mol, die mindestens eine funktionelle Gruppe enthält, welche mit reaktiven Gruppen auf der Kohlenstoffoberfläche reagieren kann, sowie zusätzlich mindestens eine funktionelle Gruppe, die mit einer Endgruppe des Polyamids reagieren kann,
d) optional übliche Hilfs- und Zusatzstoffe,
wobei die Summe der Gewichtsteile der Komponenten a) bis d) 100 beträgt, **dadurch gekennzeichnet, dass** die funktionellen Gruppen ausgewählt sind aus Oxazinongruppen, Oxazolongruppen, Oxazolingruppen, Isocyanatgruppen, Carbodiimidgruppen, N-Acyllactamgruppen, N-Acylimidgruppen, aromatischen oder aliphatischen Kohlensäureestergruppen, Epoxidgruppen und Carbonsäureanhydridgruppen mit der Maßgabe, dass Verbindungen, die mindestens zwei Kohlensäureestergruppen und daneben keine weitere anspruchsgemäße Gruppe enthalten sowie Verbindungen, die mindestens zwei Carbodiimidgruppen enthalten, nur in Kombination mit aminofunktionalisierten Carbon Nanotubes eingesetzt werden.

2. Polyamidzusammensetzung gemäß Anspruch 1, **dadurch gekennzeichnet, dass** die oligofunktionelle Verbindung der Komponente c) ein zahlenmittleres Molekulargewicht Mₙ von maximal 5000 g/mol besitzt.

3. Polyamidzusammensetzung gemäß einem der vorhergehenden Ansprüche, **dadurch gekennzeichnet, dass** die oligofunktionelle Verbindung der Komponente c) ein zahlenmittleres Molekulargewicht Mₙ von maximal 3000 g/mol besitzt.

4. Polyamidzusammensetzung gemäß einem der vorhergehenden Ansprüche, **dadurch gekennzeichnet, dass** die oligofunktionelle Verbindung der Komponente c) ein zahlenmittleres Molekulargewicht Mₙ von maximal 2000 g/mol besitzt.

5. Polyamidzusammensetzung gemäß einem der vorhergehenden Ansprüche, **dadurch gekennzeichnet, dass** die oligofunktionelle Verbindung der Komponente c) 2 bis 40 funktionelle Gruppen enthält.

6. Polyamidzusammensetzung gemäß einem der vorhergehenden Ansprüche, **dadurch gekennzeichnet, dass** sie 3 bis 25 Gew.-Teile des elektrisch leitfähigen Kohlenstoffs enthält.

7. Verfahren zur Herstellung einer Polyamidzusammensetzung gemäß einem der vorhergehenden Ansprüche, **dadurch gekennzeichnet, dass** zuerst eine Vorreaktion der Komponente c) mit dem elektrisch leitfähigen Kohlenstoff in Abwesenheit des Polyamids durchgeführt wird und das Produkt erst anschließend mit dem Polyamid und gegebenenfalls den übrigen Bestandteilen gemischt wird.

8. Verfahren zur Herstellung einer Polyamidzusammensetzung gemäß einem der Ansprüche 1 bis 6, **dadurch gekennzeichnet, dass** die Komponenten a), b), c) und gegebenenfalls d) zusammen in der Schmelze gemischt werden.

9. Verfahren zur Herstellung einer Polyamidzusammensetzung gemäß einem der Ansprüche 1 bis 6, **dadurch gekennzeichnet, dass** man zunächst ein Masterbatch herstellt, das Polyamid, die Komponente b) sowie die Komponente c) enthält, und anschließend dieses Masterbatch in ein Polyamid einmischt, das Endgruppen enthält, die mit der Komponente c) reagieren können, wobei dieses Polyamid gegebenenfalls übliche Hilf- und Zusatzstoffe enthält.

10. Verfahren gemäß Anspruch 9, **dadurch gekennzeichnet, dass** das Masterbatch eine Zusammensetzung gemäß Anspruch 6 ist.

11. Formteil, hergestellt aus der Polyamidzusammensetzung gemäß einem der Ansprüche 1 bis 6.

## Claims

1. Polyamide composition containing the following components:
a) at least 40 parts by weight of polyamide,
b) from 0.15 to 25 parts by weight of electrically conductive carbon selected from the group consisting of carbon nanotubes and graphene,
c) from 0.3 to 8 parts by weight of an oligofunctional compound having a number average molecular weight Mₙ of not more than 8000 g/mol and containing at least one functional group which can react with reactive groups on the carbon surface and also at least one functional group which can react with an end group of the polyamide,
d) optionally conventional auxiliaries and additives, where the sum of the parts by weight of the components a) to d) is 100, **characterized in that** the functional groups are selected from among oxazinone groups, oxazolone groups, oxazoline groups, isocyanate groups, carbodiimide groups, N-acyllactam groups, N-acylimide groups, aromatic or aliphatic carbonic ester groups, epoxide groups and carboxylic anhydride groups, with the proviso that compounds which contain at least two carbonic ester groups and no further groups of the type claimed and compounds which contain at least two carbodiimide groups are used only in combination with amino-functionalized carbon nanotubes.

2. Polyamide composition according to Claim 1, **characterized in that** the oligofunctional compound of the component c) has a number average molecular weight Mₙ of not more than 5000 g/mol.

3. Polyamide composition according to either of the preceding claims, **characterized in that** oligofunctional compound of the component c) has a number average molecular weight Mₙ of not more than 3000 g/mol.

4. Polyamide composition according to any of the preceding claims, **characterized in that** the oligofunctional compound of the component c) has a number average molecular weight Mₙ of not more than 2000 g/mol.

5. Polyamide composition according to either of the preceding claims, **characterized in that** the oligofunctional compound of the component c) contains from 2 to 40 functional groups.

6. Polyamide composition according to any of the preceding claims, **characterized in that** it contains from 3 to 25 parts by weight of the electrically conductive carbon.

7. Process for producing a polyamide composition according to any of the preceding claims, **characterized in that** a prereaction of the component c) with the electrically conductive carbon is firstly carried out in the absence of the polyamide and the product is only then mixed with the polyamide and optionally the remaining constituents.

8. Process for producing a polyamide composition according to any of Claims 1 to 6, **characterized in that** the components a), b), c) and optionally d) are mixed together in the melt.

9. Process for producing a polyamide composition according to any of Claims 1 to 6, **characterized in that** a masterbatch containing polyamide, the component b) and the component c) is firstly produced and this masterbatch is subsequently mixed into a polyamide containing end groups which can react with the component c), with this polyamide optionally containing conventional auxiliaries and additives.

10. Process according to Claim 9, **characterized in that** the masterbatch is a composition according to Claim 6.

11. Moulding produced from the polyamide composition according to any of Claims 1 to 6.

## Revendications

1. Composition de polyamide, qui contient les composants suivants :
a) au moins 40 parties en poids de polyamide,
b) 0,15 à 25 parties en poids de carbone électriquement conducteur, choisi dans le groupe constitué par les nanotubes de carbone et le graphène,
c) 0,3 à 8 parties en poids d'un composé oligofonctionnel ayant un poids moléculaire moyen en nombre Mₙ d'au plus 8 000 g/mol, qui contient au moins un groupe fonctionnel qui peut réagir avec des groupes réactifs sur la surface du carbone, ainsi qu'en outre au moins un groupe fonctionnel qui peut réagir avec un groupe terminal du polyamide,
d) éventuellement des adjuvants et additifs usuels,
la somme des parties en poids des composants a) à d) étant de 100, **caractérisée en ce que** les groupes fonctionnels sont choisis parmi les groupes oxazinone, les groupes oxazolone, les groupes oxazoline, les groupes isocyanate, les groupes carbodiimide, les groupes N-acyllactame, les groupes N-acylimide, les groupes ester d'acide carbonique aromatiques ou aliphatiques, les groupes époxyde et les groupes anhydride d'acide carboxylique, à condition que les composés qui contiennent au moins deux groupes ester d'acide carbonique et aucun autre groupe selon la revendication, ainsi que les composés qui contiennent au moins deux groupes carbodiimide ne soient utilisés qu'en combinaison avec des nanotubes de carbone à fonctionnalisation amino.

2. Composition de polyamide selon la revendication 1, **caractérisée en ce que** le composé oligofonctionnel du composant c) présente un poids moléculaire moyen en nombre Mₙ d'au plus 5 000 g/mol.

3. Composition de polyamide selon l'une quelconque des revendications précédentes, **caractérisée en ce que** le composé oligofonctionnel du composant c) présente un poids moléculaire moyen en nombre Mₙ d'au plus 3 000 g/mol.

4. Composition de polyamide selon l'une quelconque des revendications précédentes, **caractérisée en ce que** le composé oligofonctionnel du composant c) présente un poids moléculaire moyen en nombre Mₙ d'au plus 2 000 g/mol.

5. Composition de polyamide selon l'une quelconque des revendications précédentes, **caractérisée en ce que** le composé oligofonctionnel du composant c) contient 2 à 40 groupes fonctionnels.

6. Composition de polyamide selon l'une quelconque des revendications précédentes, **caractérisée en ce qu'**elle contient 3 à 25 parties en poids du carbone électriquement conducteur.

7. Procédé de fabrication d'une composition de polyamide selon l'une quelconque des revendications précédentes, **caractérisé en ce qu'**une réaction préliminaire du composant c) avec le carbone électriquement conducteur en l'absence du polyamide est tout d'abord réalisée, et le produit n'est qu'ensuite mélangé avec le polyamide et éventuellement les autres constituants.

8. Procédé de fabrication d'une composition de polyamide selon l'une quelconque des revendications 1 à 6, **caractérisé en ce que** les composants a), b), c) et éventuellement d) sont mélangés ensemble à l'état fondu.

9. Procédé de fabrication d'une composition de polyamide selon l'une quelconque des revendications 1 à 6, **caractérisé en ce qu'**un mélange maître est tout d'abord fabriqué, qui contient le polyamide, le composant b) et le composant c), puis ce mélange maître est incorporé dans un polyamide qui contient des groupes terminaux qui peuvent réagir avec le composant c), ce polyamide contenant éventuellement des adjuvants et additifs usuels.

10. Procédé selon la revendication 9, **caractérisé en ce que** le mélange maître est une composition selon la revendication 6.

11. Pièce moulée, fabriquée à partir de la composition de polyamide selon l'une quelconque des revendications 1 à 6.
